# EUROPEAN PATENT APPLICATION

(11) **EP 2 151 457 A1**
(43) Date of publication of application: **10.02.2010**
(21) Application number: 08290732.0
(22) Date of filing: 28.07.2008
(51) Int. Cl.: C08F 293/00, C08F 2/38, C08L 53/00

(54) **Process to make a diblock copolymer having a monovinylaromatic polymer block**

(71) Applicant: Total Petrochemicals France, 92047 Paris La Défense Cedex (FR); Centre National de la Recherche Scientifique (CNRS), 75016 Paris (FR)
(72) Inventor: Carpentier, Jean-François, 35690 Acigne (FR); Guillaume, Sophie, 35500 Vitré (FR); Helou, Marion, 35000 Rennes (FR); Sarazin, Yann, 35000 Rennes (FR); Duc, Michel, 64000 Pau (FR)
(74) Representative: Neel, Henry

(57) **Abstract**

The present invention is a process to make a composition comprising a block copolymer A-B and optionally a monovinylaromatic polymer, said process comprising :
a) forming a mixture comprising:
one or more cyclic component polymerizable by ring-opening polymerization (ROP) dispersed in at least one monovinylaromatic monomer,
optionally a rubber dissolved in the monovinylaromatic monomer,

b) contacting the mixture of step a) with a mixture of b1 and b2 such that :
b1) is M[N(SiR⁸₃)₂]ₓ in which M is a metal, R⁸ is an hydrocarbon group and x is the valency of the metal M, or
a metal alkoxide M(OR⁹)ₓ in which M is a metal, R⁹ is an hydrocarbon group and x is the valency of the metal M,
or a mixture thereof,
or a single-site metal catalyst component based upon a bulky β-diiminate ligands (BDI), represented by the following general formula: 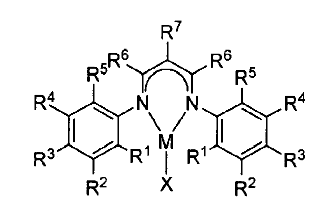 wherein R¹, R², R³, R⁴, R⁵, R⁶ and R⁷ are each independently selected from hydrogen, unsubstituted or substituted hydrocarbyl, or inert functional group and wherein two or more of said groups can be linked together to form one or more rings, wherein X is an hydrocarbyl radical having from 1 to 12 carbon atoms, an alkoxide group OR*, an amido group NR**₂ or a borohydride group (BH₄).
b2) a functional alcohol containing, besides its -OH function, another functionality Y enabling the growth or the grafting of a polyvinylaromatic, at conditions effective to produce by ROP of the cyclic component a block polymer A, having an -OH end and another function Y, dispersed in the monovinylaromatic monomer,

c) polymerizing the solution obtained at step b) optionally in the presence of a free radical initiator, optionally in the presence of chain transfer agents, at conditions effective to produce:
a monovinylaromatic block polymer B linked to the block polymer A by the aforementioned functionality Y such that H-A-O-R-Y-B or H-A-O-R-B-Y (referred in both cases as A-B to simplify) in which R is a linking group,
optionally a monovinylaromatic polymer,

d) optionally degassing the product of step c) to separate the optional unpolymerized monomers and comonomers and recovering optionally a composition comprising at least the block copolymer A-B, optionally a monovinylaromatic polymer and optionally a rubber.

At step b2) advantageously the -OH function acts as the chain transfer agent during the ROP catalytic process.

## Description

### [Field of the invention]

The present invention concerns a process to make a diblock copolymer having a monovinylaromatic polymer block and a block having ester or carbonate monomer units such as by way of example lactic acid, glycolic acid, lactones, and/or trimethylene carbonate. The mixtures of the said diblocks with a monovinylaromatic polymer have a high transparency similar to the transparency of the monovinylaromatic polymer alone. These diblocks are useful as compatibilizers in mixtures comprising at least a polymer made essentially of the same monomer units as one of the blocks and at least a polymer made essentially of the same monomer units as the other block.
Common plastic material production draws on fossil (i.e. non-renewable) reserves thus contributing to the depletion of essential and increasingly scare resources for mankind. Beyond recycling used plastic materials or valorising plastic wastes as fuel in incinerators for heat and electricity supply, it is desirable to incorporate some parts of polymers made from renewable resources in conventional plastics coming from petrochemistry. PLA (Poly(lactic acid)) is probably one of the so-called bio-polymers presenting the highest potential in terms of physical and mechanical properties, but also processability, considered as very close to polystyrene' ones.

### [Background of the invention]

Asawin Likhitsup et al in Journal of Polymer Science, Part A: Polymer Chemistry (2008), Volume 46(1), 102-116 describe a one-step procedure developed for the preparation of bifunctional initiators capable of polymerizing monomers suitable for atom-transfer radical polymerization (ATRP) and ring-opening polymerization (ROP). These bifunctional initiators were employed for making narrow disperse poly(styrene) macroinitiators, which were subsequently used for the ROP of various lactides to yield poly(styrene-block-lactide) copolymers. Thermogravimetric anal (TGA) of these block copolymers shows a two-step degradation curve with the first step corresponding to the degradation of poly(lactide) segment and the second step associated with the poly(styrene) segment of the block copolymer. The bifunctional initiators were prepared by the esterification of 3-hydroxy, 4-hydroxy, and 3,5-dihydroxy benzyl alcohols with α-bromoisobutyryl bromide and 2-bromobutyryl bromide. The esterified benzyl alcohols were employed in the polymerization of styrene under copper (Cu)-catalyzed ATRP conditions to yield macroinitiators with low polydispersity. These macroinitiators were subsequently used in the ROP of L-, DL-, and mixture of lactides. The formation of block copolymers was confirmed by gel permeation chromatography (GPC), spectroscopic and thermal characterizations.

Abdiaziz A. Farah et al in Polymer, 47, (2006), 4282-4291 have described Poly(ε-caprolactone)-block-polystyrene metallopolymers via sequential ROP and ATRP condition with in situ generated ruthenium catalyst. They have prepared a macroligand (1) from ring-opening polymerization (ROP) of (ε-caprolactone) with a hydroxy functionalized bipyridine initiator catalyzed by Sn(Oct)₂. The Macroligand (1) with two distinct end functional groups per polymeric chain was converted to a tertiary bromoester macroinitiator (2) for the optimum performance of ATRP.

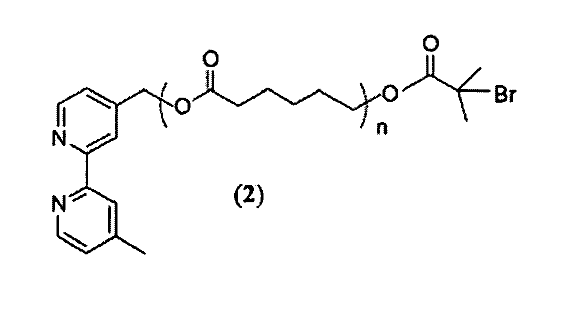

The functional macroinitiator (2) was then used in solution atom transfer radical polymerization (ATRP) of styrene with in situ generated ruthenium catalyst [RuCl₂(p-cymene)(PR₃)] to generate a diblock type poly(ε-caprolactone)-b-polystyrene (4) with vacant bipyridine binding sites at one polymer chain termination.

Chih-Feng Huang et al in Polymer, 46 (2005) 1561-1565 have described "A new strategy for the one-step synthesis of block copolymers through simultaneous free radical and ring-opening polymerizations using a dual-functional initiator". In this article is described a strategy for the one-step synthesis of block copolymers by using a combination of conventional free radical or reverse ATRP and ring-opening polymerizations. These strategies involve the use of a symmetric difunctional initiator that initiates simultaneous polymerizations of two comonomers by different polymerization chemistries. In such an approach, the initiator remains attached to each type of growing chain. The two mechanisms of polymerization must be compatible and tolerant of one another, as well as of the monomers, the reaction temperature must maintain constant, and the kinetics must be nearly identical. Such a unimolecular dual initiator is able to combine two dissimilar polymerization systems. The dual-functionalized initiator possesses a primary hydroxyl functionality, which is the initiation center for the living ROP of cyclic lactones or lactides, and an azo group, which initiates the radical polymerization of vinyl monomers upon its thermal decomposition. A monomer mixture of styrene (S) and ε-caprolactone (CL) that is initiated by the dual initiator in the presence of Sn(oct)₂ as the ROP catalyst produces the diblock copolymer PS-b-PCL. The reaction route is illustrated as follows:

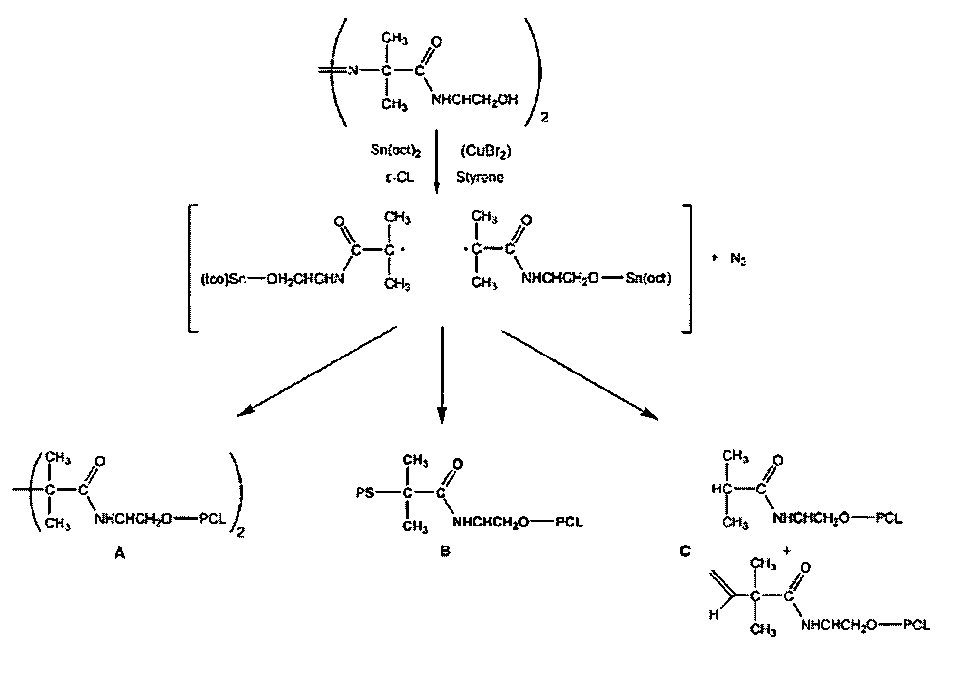

Eri Yoshida and Yusuke Osagawa have described in Macromolecules, 1998, Vol 31 pages 1446-1453 "Synthesis of Poly(ε-caprolactone) with a Stable Nitroxyl Radical as an end-functional Group and Its application to a Counter Radical for Living Radical Polymerization". In said paper the quantitative synthesis of poly(ε-caprolactone) (PCL) with 2,2,6,6-tetramethylpiperidinel-oxyl (also known as TEMPO) at one chain end was attained through the anionic polymerization of ε-CL by an aluminum tri(4-oxy-TEMPO), which was prepared by the reaction of triethylaluminum and 4-hydroxy-TEMPO. Said preparation is as follows:

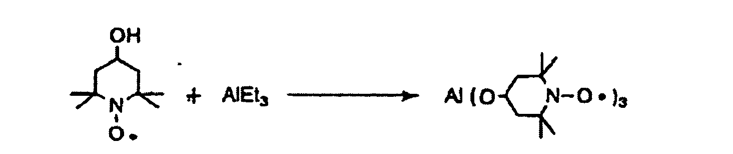

Then ε-caprolactone was polymerized to produce poly(ε-caprolactone) (PCL) with 2,2,6,6-tetramethylpiperidine1-oxyl at one chain-end as shown hereunder:

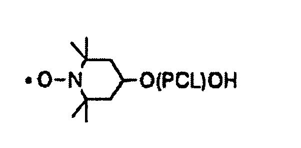

The polymerization of ε-CL was carried out in THF and not in styrene. Then said poly(ε-caprolactone) with TEMPO at one end was placed in styrene in presence of benzoyl peroxide (BPO). Polymerization is as follows:

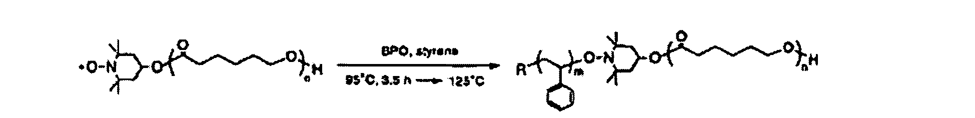

The TEMPO-supported PCL behaved as a polymeric counter radical for the radical polymerization of styrene, giving poly(CL-block-styrene) in quantitative efficiency. The radical polymerization was found to proceed in accordance with a living mechanism, because the conversion of styrene linearly increased over time, and the molecular weight was directly proportional to the reciprocal of the initial concentration of the PCL. The resulting copolymers have two glass transition temperatures due to the PCL and polystyrene blocks and one melting endotherm based on the crystalline phases of PCL.

Craig J. Hawker has described in Macromolecules, 1998, vol 31, pages 213-219, the making of diblock polymers of ε-caprolactone and styrene. Basic of the process involving functionalized alkoxyamine initiators is shown hereunder:

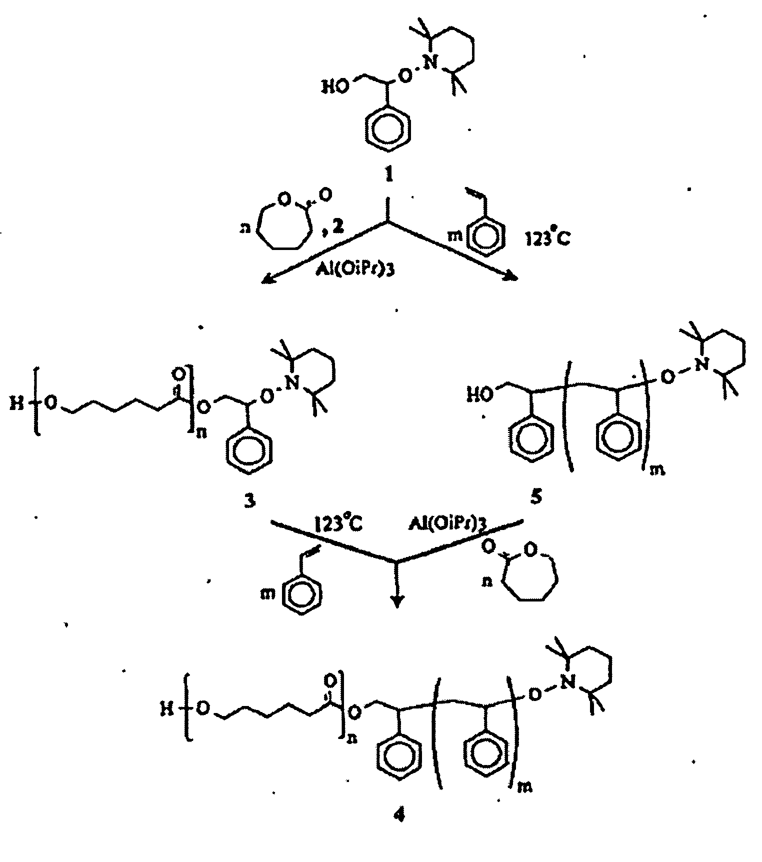

The dual, or double headed initiator, **1**, contains a single primary alcohol which is used as the initiating centre for the living ring-opening polymerization of lactones, as well as a secondary benzylic group which is an efficient initiator for the nitroxide-mediated "living" free radical polymerization of vinyl monomers. The living ring-opening polymerization of ε-caprolactone, **2**, by **1** as the initiator was studied using a catalytic amount of aluminum tris(isopropoxide) as a promoter.

Rifat Jabbar et al in Journal of Applied Polymer Science, Vol. 109, 3185-3195 (2008) published online 23 May 2008 in Wiley InterScience (www.interscience.wiley.com) have described "Nitroxide-Mediated Synthesis of Styrenic-Based Segmented and Tapered Block Copolymers Using Poly(lactide)-Functionalized TEMPO Macromediators".
The following scheme describes a way to produce styrenic-based block copolymers with poly(lactide) (PLA) via ring-opening polymerization and subsequent nitroxide mediated polymerization.

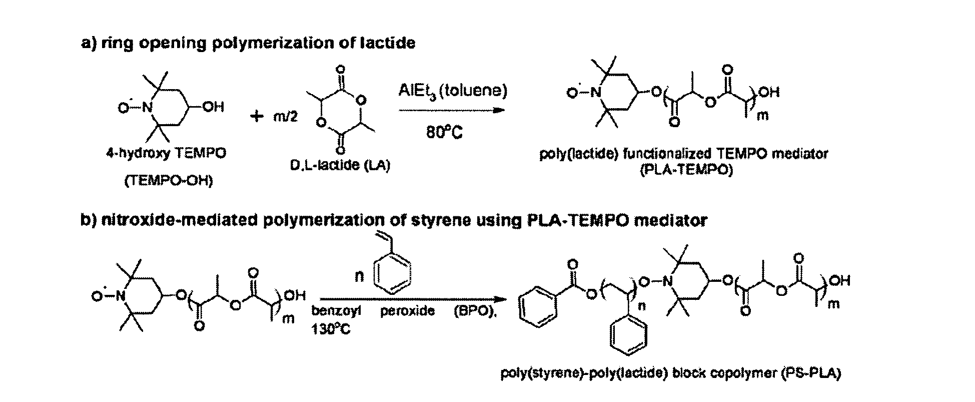

First, the hydroxyl functional TEMPO (TEMPO-OH) is used, in combination with AlEt₃, as an initiator for the ring-opening polymerization of lactide to produce the poly(lactide) functionalized TEMPO mediator (PLAT) shown in (a). The PLAT mediator is then used to polymerize styrene or *tert-*butyl styrene with a conventional initiator such as benzoyl peroxide (BPO) to make the desired styrenic-based block copolymer. The ring-opening polymerization of the lactide is made in the presence of toluene as solvent, styrene is introduced only at step b). More, TEMPO-OH is used in a nearly stoechiometric amount versus the Al precursor to generate the polymerization initiator.

It has now been discovered a more efficient process to make a diblock copolymer having a monovinylaromatic polymer block and a block having ester or carbonate monomer units such as by way of example lactic acid, glycolic acid, lactones, and/or trimethylene carbonate.

### [Brief description of the invention]

The present invention is a process to make a composition comprising a block copolymer A-B and optionally a monovinylaromatic polymer, said process comprising :
a) forming a mixture comprising:
   one or more cyclic component polymerizable by ring-opening polymerization (ROP) dispersed in at least one monovinylaromatic monomer,
   optionally a rubber dissolved in the monovinylaromatic monomer,
b) contacting the mixture of step a) with a mixture of b1 and b2 such that :
   b1) is M[N(SiR⁸₃)₂]ₓ in which M is a metal, R⁸ is an hydrocarbon group and x is the valency of the metal M, or
      a metal alkoxide M(OR⁹)ₓ in which M is a metal, R⁹ is an hydrocarbon group and x is the valency of the metal M,
      or a mixture thereof,
      or a single-site metal catalyst component based upon a bulky β-diiminate ligands (BDI), represented by the following general formula: 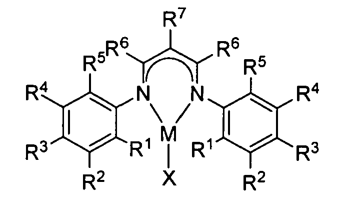
      wherein R¹, R², R³, R⁴, R⁵, R⁶ and R⁷ are each independently selected from hydrogen, unsubstituted or substituted hydrocarbyl, or inert functional group and wherein two or more of said groups can be linked together to form one or more rings, wherein X is an hydrocarbyl radical having from 1 to 12 carbon atoms, an alkoxide group OR*, an amido group NR**₂ or a borohydride group (BH₄).
   b2) a functional alcohol containing, besides its -OH function, another functionality Y enabling the growth or the grafting of a polyvinylaromatic,
      at conditions effective to produce by ROP of the cyclic component a block polymer A, having an -OH end and another function Y, dispersed in the monovinylaromatic monomer,
c) polymerizing the solution obtained at step b) optionally in the presence of a free radical initiator, optionally in the presence of chain transfer agents, at conditions effective to produce:
   a monovinylaromatic block polymer B linked to the block polymer A by the aforementioned functionality Y such that H-A-O-R-Y-B or H-A-O-R-B-Y (referred in both cases as A-B to simplify) in which R is a linking group,
   optionally a monovinylaromatic polymer,
d) optionally degassing the product of step c) to separate the optional unpolymerized monomers and comonomers and recovering optionally a composition comprising at least the block copolymer A-B, optionally a monovinylaromatic polymer and optionally a rubber.

At step b2) advantageously the -OH function acts as the chain transfer agent during the ROP catalytic process.

In step c) the linking group R can be a hydrocarbon group.

In step c) in H-A-O-R-Y-B or H-A-O-R-B-Y the letter "Y" designates a functionality or the precursor of said functionality. In a specific embodiment the letter "Y" can designate Y or Y*.

In step b2), as example of Y, one can cite a nitroxide function =N-O*, a (meth)acrylate function, an alkene function, a thiol function, an alkoxy-amine function.

In step b1) the metal M in M[N(SiR⁸₃)₂]ₓ, in the M alkoxide and in the M (BDI) can be the same or different.

In the present invention one or more comonomers copolymerizable with the monovinylaromatic monomer may be present. In the present description and claims said poly(monovinylaromatic monomer and one or more comonomers) is also referred as monovinylaromatic polymer.

At step b1) the metal M in M[N(SiR⁸₃)₂]ₓ is advantageously a metal selected among the Lanthanides (Ln), Y, Zn, Fe and alkalino-earth metals such as, by way of example, Mg or Ca. R⁸ is advantageously selected among a C1-C6 alkyl, a cycloalkyl and is advantageously a methyl or isopropyl group.
At step b1) the metal alkoxide is advantageously an aluminum alkoxide, preferably aluminum tris(isopropoxide).
At step b1) the single-site metal catalyst is advantageously a β-diiminate-Zn-amido or a β-diiminate-zinc alkoxide complex as described for instance by Coates et al. (B.M. Chamberlain, M. Cheng, D.R. Moore, T.M. Ovitt, E.B. Lobkovsky, and G.W. Coates, in J. Am. Chem. Soc., 2001, 123, 3229).
At step b2) the functional alcohol is advantageously a stable radical such as 4-hydroxy-2,2,6,6-tetramethylpiperidine 1-oxyl (also known as TEMPO-OH or 4-hydroxy-TEMPO), as shown hereunder: 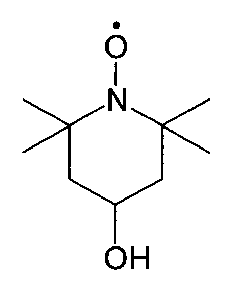 or a functional alcohol such as 2-hydroxyethanol methacrylate (HEMA), an unsaturated alcohol such as citronellol or geraniol, or an hydroxy-alkoxyamine such as shown hereafter:

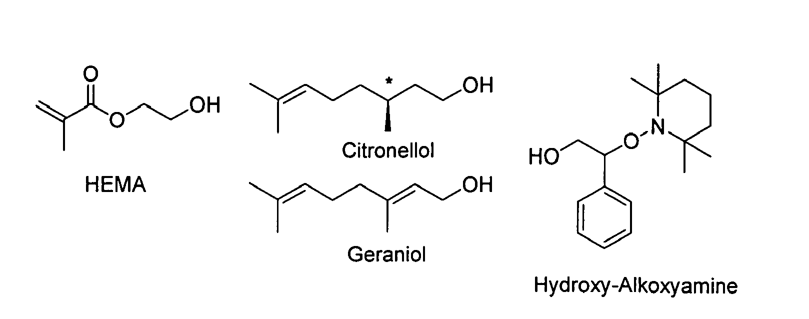

At step b2), an excess of the functional alcohol is used with respect to the metal catalyst of b1). The molar excess is in the range 1 to 200. The functional alcohol acts as an activator, eventually transforming in situ the catalyst precursor into an active metal-alkoxide species. Excess alcohol acts as transfer agent, thus generating as many polymer chains H-A-O-R-Y as excess functional alcohol molecules are introduced.
According to the operating conditions of step c) a portion of the monovinylaromatic monomer may also be polymerized as an homopolymer (or a copolymer when two or more monovinyl aromatic monomers are present) independantly of the diblock A-B. The mixtures of said diblocks A-B with a monovinylaromatic polymer made by the above process are nanostructured. When there is essentially no rubber, they have a high transparency similar to the transparency of the monovinylaromatic polymer alone. In said mixtures, the monovinylaromatic polymer is made of the same monomer units as the block B.
When the above process produces the diblock A-B and essentially no monovinyl aromatic homopolymer independently of the diblock A-B said diblocks A-B recovered at step d) can be used as compatibilizers.

The diblocks A-B are useful as compatibilizers in mixtures comprising at least a polymer made essentially of the same monomer units as the block A and at least a polymer made essentially of the same monomer units as the block B. The present invention also relates to said mixtures. These mixtures are often nanostructured.

The present invention also relates to a mixture comprising the diblock A-B and :
either one or more polymers made essentially of the same monomer units as the block A,
or one or more polymers made essentially of the same monomer units as the block B.
These mixtures are often nanostructured.

The present invention also relates to a composition comprising:
a block copolymer H-A-O-R-Y-B or H-A-O-R-B-Y, referred as A-B for simplification, in which
   the repeating units of the block A are selected among the residues of one or more aliphatic hydroxycarboxylic acid and the residues of one or more cyclic carbonate,
   the repeating units of the block B are the residues of a monovinyl aromatic monomer,
   the block A and the block B are linked as H-A-O-R-Y-B or H-A-O-R-B-Y in which R and Y are deriving from a functional alcohol containing, besides its -OH function, another functionality Y enabling the growth or
   the grafting of a polyvinylaromatic, and in which R is a linking group,
optionally a polymer A1 compatible with the block A,
optionally a polymer B1 compatible with the block B,
wherein,
At least one of A1 or B1 is present.

Advantageously the polymer A1 is made essentially of the same monomer units as the block A. Advantageously the polymer B1 is made essentially of the same monomer units as the block B.
The functional alcohol has already been defined above.

### [Detailed description of the invention]

**As regards the cyclic component polymerizable by ring-opening polymerization**, the cyclic monomers or dimers of aliphatic hydroxycarboxylic acids can be cited. Examples of these include lactide, glycolide, β-propiolactone, β-butyrolactone, γ-butyrolactone, γ-valerolactone, δ-valerolactone, ε-caprolactone and the like.
In the case of asymmetric carbon atoms within the hydroxy carboxylic acid unit, each of the D-form and the L-form as well as mixtures of both may be used. Racemic mixtures can also be used. By way of example the D,D-lactide is the cyclic dimer made of two D-lactic acid, the L,L-lactide is the cyclic dimer made of two L-lactic acid, the meso lactide is the dimer made of one D-lactic acid and one L-lactic acid. L,D-lactide designates a racemic mixture of L,L-lactide and D,D-lactide.
Other cyclic components polymerizable by ring-opening polymerization are the cyclic carbonates and advantageously the 5- to 7-membered cyclic carbonates. Preferably, this polymerization process is operative for 5- and 6-membered cyclic carbonates. As non-limitative examples, one can cite: trimethylenecarbonate (TMC), 2-benzyloxy-trimethylenecarbonate (BTMC), 2-hydroxy-trimethylenecarbonate (TMCOH), 4-(benzyloxymethyl)-1,3-dioxolan-2-one (BDMC), 4-(hydroxymethyl)-1,3-dioxolan-2-one (DMCOH). In particular, one can cite cyclic carbonates such as 2-oxy-trimethylenecarbonate (OTMC), dehydrotrimethylenecarbonate (DHTMC) and 2,2 dimethoxy trimethylene carbonate (TMC(OMe)₂).

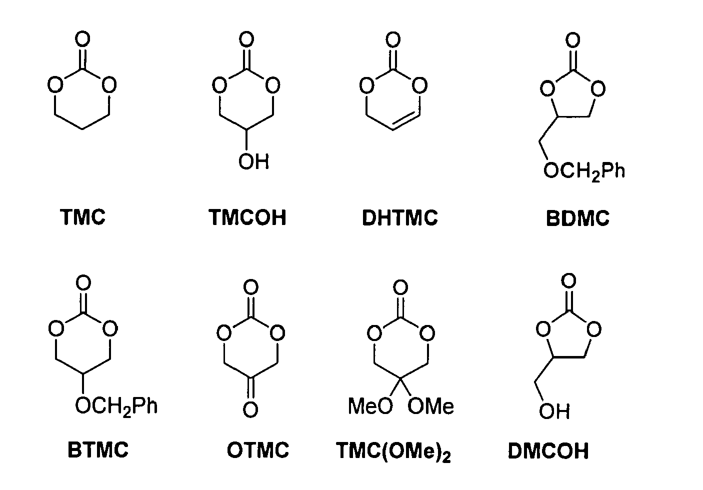

Ring opening polymerization of trimethylene carbonate is as follows:

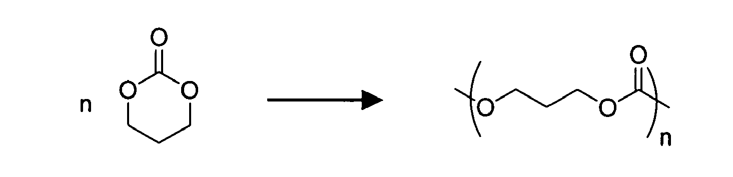

**As regards the monovinylaromatic monomer**, it relates to any aromatic bearing a vinyl function. By way of example, mention may be made of styrene, vinyl toluene, alphamethylstyrene, alphaethylstyrene, methyl-4-styrene, methyl-3-styrene, methoxy-4-styrene, hydroxymethyl-2-styrene, ethyl-4-styrene, ethoxy-4-styrene, dimethyl-3,4-styrene, chloro-2-styrene, chloro-3-styrene, chloro-4-methyl-3-styrene, tert.-butyl-3-styrene, dichloro-2,4-styrene, dichloro-2,6-styrene,vinyl-1-naphtalene and vinylanthracene. It would not depart from the scope of the invention to use more than one monovinylaromatic monomer. A part of the monovinylaromatic monomer may be replaced by unsaturated monomers copolymerizable with styrene. By way of example, mention may be made of alkyl esters of acrylic or methacrylc acid, acrylonitrile and methacrylonitrile. The proportion of comonomer may be from 0 to 50% by weight for respectively 100 to 50% of the monovinylaromatic monomer. In a specific embodiment the monovinylaromatic polymer comprises :
i) from 60 to 100 weight % of one or more C₈₋₁₂ monovinylaromatic monomers; and
ii) from 0 to 40 weight % of one or more monomers selected from the group consisting of C₁₋₄ alkyl esters of acrylic or methacrylc acid and acrylonitrile and methacrylonitrile.

**As regards the rubber,** mention may be made of EPR (the abbreviation for ethylene-propylene rubber or ethylene- propylene elastomer), EPDM (the abbreviation for ethylene-propylene-diene rubber or ethylene-propylene-diene elastomer), polybutadiene, acrylonitrile-butadiene copolymer, polyisoprene, isoprene-acrylonitrile copolymer, SBR (Styrene butadiene rubber), styrenic block copolymers with a hydrogenated midblock of styrene-ethylene/butylene-styrene (SEBS) or styrene-ethylene/propylene-styrene (SEPS), and any copolymer having styrene blocks. More particularly the copolymers having styrene blocks are advantageously copolymers with styrene blocks and blocks made of butadiene or isoprene or of a mixture butadiene /isoprene. These block copolymers can be linear block copolymers or star block copolymers, hydrogenated and/or functionalized. These copolymers are described in ULLMANN'S ENCYCLOPEDIA OF INDUSTRIAL CHEMISTRY, fifth edition (1995) Vol A26, pages 655-659. They are sold by Total Petrochemicals under the trade mark Finaclear®, by BASF under the trade mark Styrolux®, by Kraton under the trade name of Kraton® D, and under the trade mark K-Resin® by Chevron Phillips Chemical.
By way of example the rubber can be selected from the group consisting of:
a) co- and homopolymers of C₄₋₆ conjugated diolefins,
b) copolymers comprising from 60 to 85 weight % of one or more C₄₋₆ conjugated diolefins and from 15 to 40 weight % of a monomer selected from the group consisting of acrylonitrile and methacrylonitrile and
c) copolymers comprising from 20 to 60, preferably from 40 to 50 weight % of one or more C₈₋₁₂ vinyl aromatic monomers which are unsubstituted or substituted by a C₁₋₄ alkyl radical and from 60 to 40, preferably from 60 to 50 weight % of one or more monomers selected from the group consisting of C₄₋₆ conjugated diolefins. The rubber may be prepared by a number of methods, preferably by emulsion or solution polymerization. These processes are well known to those skilled in the art. It would not depart from the scope of the invention to use more than one rubber.

**As regards the component b1) in step b),** the proportion of b1 is advantageously such as the ratio of the cyclic component polymerizable by ring-opening polymerization to M or to the metal in the alkoxide (as metal center) or the single-site metal catalyst ranges from 100 to 100 000.

**As regards the functional alcohol used in b2)**, it can be the component as such or a precursor of such component capable to produce said molecule having an -OH function and a Y function prior or during the ring-opening polymerization. For instance, the Y function can be a stable radical having an -OH function and a nitroxide function =N-O* such as described in WO 94-11412, US 6,734,269, US 7,196,144 and US 6,911,511.
For example the Lactide ROP is as follows:

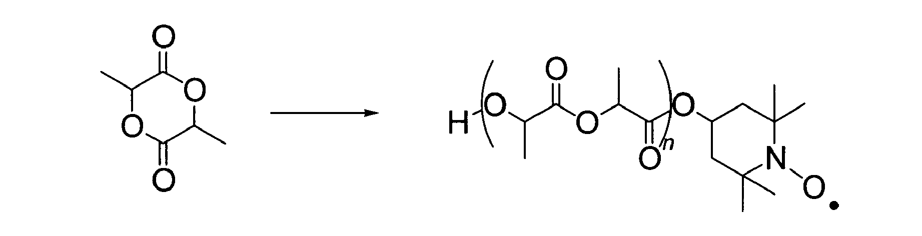

Advantageously the ratio of the number of equivalent of functional alcohol to M or to the metal in the alkoxide (as metal center) or the single-site metal catalyst ranges from 1 to 200.

The polyester and polycarbonate blocks thus prepared show typically a unimodal molecular weight distribution that ranges from 1.1 to 5.0, more typically from 1.5 to 2.5.
The number average molecular weight Mn can be tuned by the monomer-to-functional alcohol ratio and ranges from 1 000 to 1 000 000 g/mol, more typically from 10 000 to 250 000 g/mol.
It is recommended to make the ring-opening polymerization of step b) at moderate temperature to prevent the polymerization of the monovinylaromatic monomer. Advantageously said temperature is below 100 °C, preferably below 80 °C.

**As regards step c),** in which the solution obtained at step b) is polymerized optionally in the presence of a free radical initiator, optionally in the presence of chain transfer agents, at conditions effective to produce:
a monovinylaromatic block polymer B linked to the block polymer A by the aforementioned functionality Y such that H-A-O-R-Y-B or H-A-O-R-B-Y (referred as A-B to simplify),
optionally a monovinylaromatic polymer.
when the monovinylaromatic monomer is styrene and the functional alcohol is TEMPO-OH, the scheme is the following :

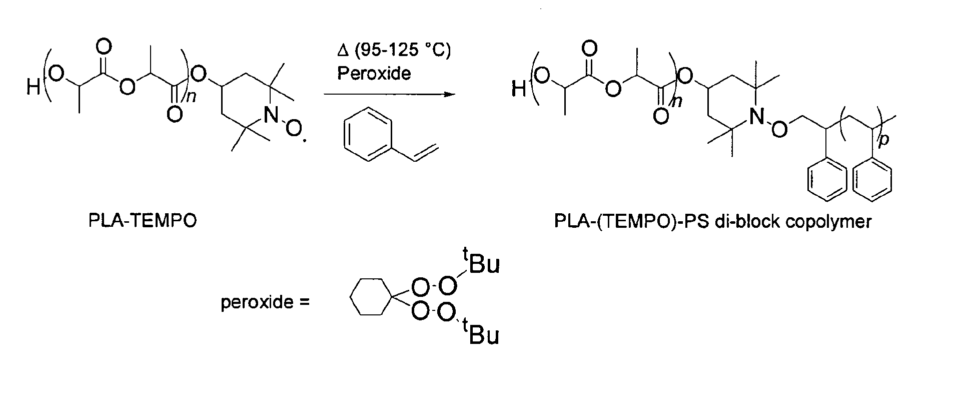

As examples of free radical initiators one can cite the organic peroxides (e.g. 1,1-di-(tert-butylperoxy)cyclohexane; 1,1-di-(tert-amylperoxy)cyclohexane); 1,1-di-(tert-butylperoxy)-3,3,5-trimethyl-cyclohexane; O,O-tert-amyl-O-(2-ethylbexyl monoperoxy-carbonate); OO-tert-butyl O-isopropyl monoperoxy-carbonate; OO-tert-butyl-0-(2-ethylhexyl) monoperoxy-carbonate; butyl 4,4-di(tert-butylperoxy)valerate; ethyl 3,3-Di-(tert-butylperoxy)butyrate; and mixtures thereof), hydroperoxides and singlet-oxygen (¹O₂).

A portion of the monovinylaromatic monomer may also be polymerized as a monovinylaromatic polymer independently of the above mechanism, following a usual radical mechanism. The proportion of the monovinylaromatic polymer is increasing with the presence of a chain transfer agent at step c).

When the amount of monovinyl aromatic monomer is high enough and the temperature high enough, a substantial portion of the monovinyl aromatic monomer is also polymerized as an homopolymer (or a copolymer when two or more monovinyl aromatic monomers are present) independently of the diblock A-B.

**As regards step d),** in said step d) is made the degassing of the product of step c) to separate the optional unpolymerized monomers and comonomers and recovering a composition comprising at least the block copolymer A-B, optionally a monovinylaromatic polymer and optionally a rubber.

### [Examples]

### Operating conditions :

### Materials

The initiator Y[N(SiMe₃)₂]₃ was prepared as described in T. J. Woodman, Y. Sarazin, G. Fink, K. Hauschild, M. Bochmann, Macromolecules, 2005, 38, 3060-3067. The initiator Zn[N(SiMe₃)₂]₂ was prepared as described in M. Bochmann, G. Bwembya, K. J. Webb, Inorg. Synth., 1997, 31, 19-24. The synthesis of (BDI)ZnN(SiMe₃)₂ was performed according to B. M. Chamberlain, M. Cheng, D. R. Moore, T. M. Ovitt, E. B. Lobkovsky, G. W. Coates, J. Am. Chem. Soc., 2001, 123, 3229-3238.
Al(OiPr)₃ (99.99+%), 1,1-bis(*tert*-butylperoxy)cyclohexane (80 wt-% in mineral oil) and 2-propanol (99.5%) were purchased from Aldrich and used without further purification. Styrene (99+%) was received from Aldrich, dried over CaH2 for a minimum of 48 hours, distilled by heating under dynamic vacuum and stored at 4 °C over activated molecular sieves; it was used within two weeks to avoid contamination by polystyrene.
Toluene was pre-dried over sodium, and systematically distilled under Argon from a sodium mirror prior to use. The 4-hydroxy-2,2,6,6-tetramethylpiperidinooxy (TEMPO-OH) free radical (Acros, 98%) was recrystallized from a concentrated toluene solution stored at 4 °C; it was manipulated in the dark at all times. Purification of the monomer D,L-3,6-dimethyl-1,4-dioxane-2,5-dione (*rac-*LA; Acros, 99%) was ensured by recrystallizing it from a hot 2-propanol solution (80 °C), followed by two subsequent recrystallizations in hot toluene (105°C); the monomer was stored at room temperature under the inert atmosphere of the glovebox.

### Typical rac-LA polymerization procedure

All manipulations were performed under inert atmosphere. In the glove-box, the metallic initiator and the co-initiator (2-propanol or TEMPO-OH) were placed at once in a Schlenk tube, while the monomer *rac-*LA was loaded in a bent glass finger. The Schlenk tube and bent finger were sealed, and removed from the glove box. All subsequent operations were carried out on a Schlenk line, using standard Schlenk techniques. The required amount of solvent (toluene or styrene) was added with a syringe to the Schlenk tube containing the initiator and co-initiator, and the resulting mixture was stirred until complete dissolution of the solids was ensured. The monomer was added with the bent finger, and the polymerization time was measured from this point. The reaction was terminated by addition of acidified MeOH (HCl, 1 wt-%) and the polymer was precipitated in hexane. It was purified by several re-precipitations,using THF as solvent and hexane as a non-solvent. The polymer was then dried to constant weight by heating at 60 °C under dynamic vacuum (<10-2 mbar).

### Preparation of PLA-b-PS block copolymers

In a typical reaction, PLA-TEMPO n°15 (PLA-15; 100 mg, 14.1 mmol) and 1,1-bis(*tert*-butylperoxy)-cyclohexane (4.5 mg, 17.3 mmol) were dissolved in styrene (0.8 mL), and the vessel containing the resulting colorless solution was immerged in an oil bath set to the required temperature. The polymerization time was measured from this point. The reaction was then stopped after the appropriate time by removal of the reactor from the oil bath followed by precipitation of the polymer *via* addition of hexane. The polymer was purified by several re-precipitations, using THF as solvent and hexane as a non-solvent. It was then dried to constant weight by heating at 60 °C under dynamic vacuum (<10-2 mbar).

### Polymer characterization

Gel Permeation Chromatography (GPC) measurements were performed on a Polymer Laboratories PL-GPC 50 instrument equipped with a PLgel 5A MIXED-C column and a refractive index detector. The GPC column was eluted with THF at room temperature at 1ml/min and was calibrated using 5 monodisperse polystyrene standards in the range 580-380 000 g.mol⁻¹. According to literature recommendations,[19] the molecular weights of all poly(lactide)s determined *vs*. polystyrene standards were corrected by a Mark-Houwink factor of 0.58.

### Example 1 (results are displayed on table 1)

A first series of experiments was performed in order to assess the efficiency of the free radical 4-hydroxy-2,2,6,6-tetramethyl-piperidinooxy (TEMPO-OH) as a co-initiator for the ring-opening polymerization (ROP) in styrene of 3,6-dimethyl-1,4-dioxane-2,5-dione (*rac*-LA) promoted by Y[N(SiMe₃)₂]₃, and to ascertain whether styrene could be employed as a solvent without detrimental effect for such polymerization reactions (Table 1). This was achieved by comparing the use of 2-propanol and TEMPO-OH on the one hand, and the solvents toluene and styrene on the other hand.
The polymerization in toluene of 100 equivalents (eq.) of *rac*-LA initiated by the system Y[N(SiMe₃)₂]₃/2-propanol with 3 eq. of alcohol per metal center ([Y]/[OH] = 1:3) proceeds rapidly and in a controlled fashion (entries 1 and 2): the conversion reaches 79% after 5 min., and is complete within 10 min.; the corresponding polymers exhibit very narrow polydispersities (*M*w/*M*n = 1.1-1.2), and the observed number-average molecular weights (*M*n) of 5 800 and 6 500 g.mol⁻¹ -as determined by gel permeation chromatography (GPC) versus polystyrene standards- are closed to their theoretical values (respectively 7 600 and 4 800 g.mol⁻¹). These two reactions suggest that the system Y[N(SiMe₃)₂]₃/2-propanol is extremely effective for the polymerization of *rac-*LA. By comparison, a test reaction indicated that Y[N(SiMe₃)₂]₃ by itself only yielded traces of polylactide (PLA) under the same conditions.
Changing toluene for styrene does not alter in the least the nature of the catalytic system. The same PLAs are rigorously obtained (100% conversion; *M*n = 6 400 - 6 500 g.mol⁻¹,(*M*_{w}/*M*ₙ = 1.2) when the polymerizations are carried out in toluene (entry 2) or styrene (entry 3). Therefore, we have demonstrated that at room temperature at least, styrene can be used as a solvent for the polymerization of *rac*-LA instead of toluene with no detrimental effect. Finally, two reactions performed with 3 eq. of TEMPO-OH instead of 2-propanol confirm the suitability of the catalytic system Y[N(SiMe₃)₂]₃/TEMPO-OH for the polymerization of *rac*-LA. First, Y[N(SiMe₃)₂]₃/TEMPO-OH does not polymerize styrene itself at room temperature (entry 4) since no polymer is isolated when a test reaction is carried out in the absence of *rac*-LA (*i*.*e*. styrene is not only the solvent, but also the only available monomer). Secondly, the polymerization of 100 eq. of *rac*-LA with Y[N(SiMe₃)₂]₃/TEMPO-OH = 1:3 (entry 5) is not only fast (complete conversion is reached within 10 min.) but also relatively well controlled (*M*n = 7 400 g.mol⁻¹, *M*_{w}/*M*ₙ = 1.5), although the control is slightly inferior to that achieved with 2-propanol under otherwise identical experimental conditions (entries 3 *vs*. 5). It is noteworthy that very concentrated solutions of *rac*-LA in styrene can be employed successfully for the polymerization reactions with the systems described here (hence, in this work, we have used [*rac*-LA]0 = 2.0 mol.L⁻¹).
In summary, the experiments described above allow to establish that:
- The system Y[N(SiMe₃)₂]₃/2-propanol provides a suitable and very efficient initiator
   for the polymerization of *rac*-LA in toluene;
- Styrene can be used as a solvent instead of toluene without prejudice;
- The system Y[N(SiMe₃)₂]₃/TEMPO-OH provides a suitable and very efficient initiator for the polymerization of *rac*-LA in styrene.

**Table 1- Tests with Y[N(SiMe₃)₂]₃**

| | Solvent | Alcool | *rac* LA/YIROH | Y[N(SiMe₃)₂]₃ [µmol] | [Y] [mmol.L⁻¹] | T [°C] | [LA] [mol.⁻¹] | Time [min] | Conversion [%] | *Mₙ* theo^{a} [g.mol⁻¹] | *Mₙ* GPC^{b}, [g.mol⁻¹] | *M_{w}*/*Mₙ*^{b} |
|---|---|---|---|---|---|---|---|---|---|---|---|---|
| 1 | Tol | iso PrOH | 100/1/3 | 20 | 20 | 20 | 2 | 5 | 79 | 7 600 | 5 800 | 1,1 |
| 2 | Tol | iso PrOH | 100/1/3 | 20 | 20 | 20 | 2 | 10 | 100 | 4 800 | 6 500 | 1,2 |
| 3 | Sty | iso PrOH | 100/1/3 | 20 | 20 | 20 | 2 | 10 | 100 | 4 800 | 6 400 | 1.2 |
| 4 | Sty | TEMPO-OH | 0/1/3 | 20 | 20 | 20 | - | 10 | - | - | - | - |
| 5 | Sty | TEMPO-OH | 100/1/3 | 20 | 20 | 20 | 2 | 10 | 100 | 4 800 | 7 400 | 1.5 |

| | | | | | | | | | | | | |
|---|---|---|---|---|---|---|---|---|---|---|---|---|
| ^{a} *Mₙ* theo = [rac-LA]ₒ/[ROH] x conversion x 144 ^{b} *Mₙ* and *M_{w}*/*Mₙ* values as determined by GPC in THF vs. polystyrene standards and corrected by a factor of 0.58. | | | | | | | | | | | | |

### Example 2- Nature of the initiator (Table 2)

Three of the most commonly used metals for the ROP of cyclic esters are yttrium, zinc and aluminum. Although they are considered of easier access and use than their zinc and yttrium counterparts, aluminum-based initiators are also intrinsically less active and require harsher reaction conditions to be effective. We have so far selected three readily accessible precursors:
Y[N(SiMe₃)₂]₃, Zn[N(SiMe₃)₂]₂ and Al(O*i*Pr)₃. A series of experiments has been conducted in the presence of these initiators to assess:
   (i) the efficiency of the systems M[N(SiMe₃)₂]ₙ/TEMPO-OH (M = Zn, n = 2; M = Y, n = 3) and Al(O*i*Pr)₃/TEMPO-OH and
   (ii) the scope they offer for the production of TEMPO-end-capped polylactide (PLA-TEMPO) by ROP of *rac*-LA in styrene (Table 2).

The polymerization of 200 eq. *rac*-LA promoted by Y[N(SiMe₃)₂]₃ and 10 eq. of TEMPO-OH is extremely rapid and well controlled (entry 6). Complete conversion is achieved within 5 min., and the experimental number-average molecular weight of the resulting PLA-TEMPO is nearly identical to the theoretical value (*Mn* = 2 900 g.mol⁻¹). Besides, the reproducibility is excellent, as evidenced by the very similar results obtained in two identical but independent experiments (entries 6 and 7).
The analogous polymerization carried out in presence of Zn[N(SiMe₃)₂]₂ (entry 8) with *rac*-LA/ Zn[N(SiMe₃)₂]₂ / TEMPO-OH = 200:1:10 is also rapid (49% conversion in 5 min.) and very well controlled (*M*n = 2 500 g.mol-1, *M*_{w}/*M*ₙ = 1.1). This is also the case with (BDI)ZnN(SiMe₃)₂, although this system is somewhat slower (*M*ₙ = 1 900 g.mol⁻¹, *M*_{w}/*M*ₙ = 1.3; 76% conversion after 30 minutes). By contrast, after 5 min., Al(OiPr)₃ yields negligible amounts of polymer under otherwise equivalent conditions (entry 9); equally, only traces of polymer are recovered when the reaction is performed at 80±2 °C for the same amount of time (entry 10). It is only after longer reaction times at elevated temperature (180 min., 80±2 °C: entry 11) that the system Al(O*i*Pr)₃/TEMPO-OH (10 eq. of co-initiator) yields significant quantities of polymer (41% conversion of 200 eq. of *rac*-LA), albeit in a controlled manner (*M*ₙ = 1 750 g.mol⁻¹, *M*_{w}/*M*ₙ =1.1).

In summary, the experiments described above allow to establish that:
- One can extend the use of the co-initiator TEMPO-OH to a wide range of metal-based initiators for the polymerization of *rac*-LA in styrene;
- In association with TEMPO-OH, the following activity is observed for the polymerization of *rac*-LA in styrene:

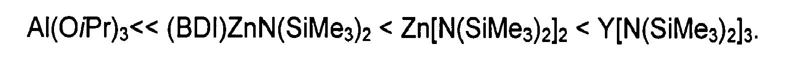

**Table 2 - Comparison between initiators**

| | Initiator | *rac*-LA/M/ROH | M [µmol] | [M] [mmol.L⁻¹] | T [°C] | [LA] [mol.⁻¹] | Time [min] | Conversion [%] | *Mₙ* theo^{a} [g.mol⁻¹] | *Mₙ*, GPC^{b} [g.mol⁻¹] | *M_{w}*/*Mₙ*^{b} |
|---|---|---|---|---|---|---|---|---|---|---|---|
| 6 | Y[N(SiMe₃)₂]₃ | 200/1/10 | 20 | 10 | 20 | 2 | 5 | 100 | 2900 | 3200 | 1.3 |
| 7 | Y[N(SiMe₃)₂]₃ | 200/1/10 | 20 | 10 | 20 | 2 | 5 | 100 | 2 900 | 3600 | 1.2 |
| 8 | Zn[N(SiMe₃)₂]₂ | 200/1/10 | 25.6 | 10 | 20 | 2 | 5 | 49 | 1 400 | 2 500 | 1.1 |
| | (BDI)ZnN(SiMe₃)₂ | 200/1/10 | 23.3 | 10 | 20 | 2 | 30 | 76 | 2200 | 1 900 | 1.3 |
| 9 | Al(OiPr)₃ | 200/1/10 | 28.4 | 10 | 20 | 2 | 5 | <1 | - | - | - |
| 10 | Al(OiPr)₃ | 200/1/10 | 39.2 | 10 | 80 | 2 | 5 | <1 | - | - | - |
| 11 | Al(OiPr)₃ | 200/1/10 | 31.8 | 10 | 80 | 2 | 180 | 41 | 1200 | 1 750 | 1.1 |

| | | | | | | | | | | | |
|---|---|---|---|---|---|---|---|---|---|---|---|
| ^{a} *Mₙ* theo = [rac-LA]ₒ/[ROH] x conversion x 144 ^{b} *Mₙ* and *M_{w}*/*Mₙ* values as determined by GPC in THF vs. polystyrene standards and corrected by a factor of 0.58. Polymerization conditions Solvent: styrene (2.0 ml) Co-initiator: TEMPO-OH | | | | | | | | | | | |

### Example 3- Influence of the amount of co-initiator TEMPO-OH (Table 3)

The importance of the amount of co-initiator with respect to that of the metallic initiator has been evaluated by varying the number of equivalents of TEMPO-OH per metal center from 1 to 10 eq. for the polymerization of 200 eq. of *rac*-LA in styrene at room temperature using Y[N(SiMe₃)₂]₃ as the initiator (Table 3). While the polymerization with Y[N(SiMe₃)₂]₃/TEMPO-OH = 1:1 (entry 12) is slow and not properly controlled (4% conversion after 5 min., *M*n = 9 300 g.mol⁻¹, *M*_{w}/*M*ₙ = 1.9), the use of 3 eq. of TEMPO-OH (entry 13) per metal substantially enhances the rate of the polymerization (78% conversion after 5 min.) and affords a better control (*M*ₙ = 11 600 g.mol⁻¹, *M*_{w}/*M*ₙ = 1.6).
The best results so far are clearly achieved with Y[N(SiMe₃)₂]₃/TEMPO-OH = 1:10 (entry 6). Conversion of the 200 eq. of monomer is complete after 5 min., and the control is excellent since the experimental molecular weight (*M*ₙ = 3 200 g.mol⁻¹, *M*_{w}/*M*ₙ = 1.3) is close to its theoretical value (2 900 g.mol⁻¹). These results clearly show that, at room temperature, both the rate and the control of the polymerization increase with the number of equivalents of TEMPO-OH per metal center. The best results so far are achieved with Y[N(SiMe₃)₂]₃/TEMPO-OH = 1:10, when 10 PLA-TEMPO chains are formed per metal center: that is, under these conditions, the chain transfer between growing species and TEMPO-OH is very efficient, and almost each equivalent of TEMPO-OH leads to the formation of a PLA-TEMPO chain. In principle, one may reasonably assume that even higher TEMPO-OH/Y[N(SiMe₃)₂]₃ ratios can be used to allow the production of larger quantities of polymer chains per metal center.

**Table 3 - Influence of the amount of co-initiator TEMPO-OH in the Y[N(SiMe₃)₂]₃/TEMPO-OH system**

| | *rac*-LA/Y/ROH | Y [µmol] | [M] [mmol.L⁻¹] | T [°C] | [LA] [mol.⁻¹] | Time [min] | Conversion [%] | *Mₙ* theo^{a} [g.mol⁻¹] | *Mₙ*, GPC^{b} [g.mol⁻¹] | *M_{w}*/*Mₙ*^{b} |
|---|---|---|---|---|---|---|---|---|---|---|
| 12 | 200/1/1 | 20 | 10 | 20 | 2 | 5 | 4 | 1 150 | 9 300 | 1.9 |
| 13 | 200/1/3 | 20 | 10 | 20 | 2 | 5 | 78 | 7 500 | 11 600 | 1.6 |
| 6 | 200/1/10 | 20 | 10 | 20 | 2 | 5 | 100 | 2900 | 3200 | 1.3 |

| | | | | | | | | | | |
|---|---|---|---|---|---|---|---|---|---|---|
| ^{a} *Mₙ* theo = [rac-LA]ₒ/[ROH] x conversion x 144 ^{b} *Mₙ* and *M_{w}*/*Mₙ* values as determined by GPC in THF vs. polystyrene standards and corrected by a factor of 0.58. Polymerization conditions Solvent: styrene (2.0 ml) 4.0 mmol rac-LA (576 mg) Initiator: Y[N(SiMe₃)₂]₃ Co-initiator:TEMPO-OH | | | | | | | | | | |

### Example 4- Influence of the amount of monomer (Table 4 and 4')

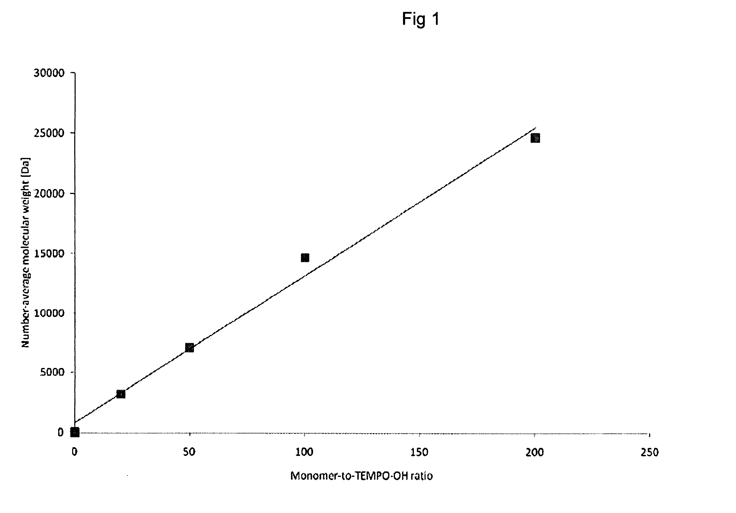

At a constant Y[N(SiMe₃)₂]₃/TEMPO-OH ratio of 1:10, the quantity of *rac-*LA introduced in the polymerization medium was varied from 200 to 2 000 eq. per metal center to ascertain whether large amounts of monomer could be polymerized under our experimental conditions (in styrene, at room temperature, [LA]0 = 2.0 mol.L⁻¹; Table 4).
The polymerization of 200 eq. of monomer reaches 63% after 3 min. (entry 14), and is complete after 5 min. (entry 6). Over this time range, there is a linear increase of the conversion *vs*. reaction time. Exactly the same as with 200 eq. of *rac*-LA, the polymerization of 500 eq. of monomer (entry 15) is extremely fast and complete within 5 min., and there is an excellent agreement between
the experimentally determined molecular weights (*M*ₙ = 7 100 g.mol⁻¹, *M*_{w}/*M*ₙ = 1.2) and their theoretical values (7 200 g.mol⁻¹). Besides, there is no evidence of undesired transesterification process (a common detrimental phenomenon at high monomer conversion) after longer reaction times, since there is no or hardly any significant change in the molecular weight distributions of the PLA-TEMPO isolated after 10 (entry 16: *M*ₙ = 7 100 g.mol⁻¹, *M*_{w}/*M*ₙ = 1.2) and 30 minutes (entry 17; *M*ₙ = 7 600 g.mol⁻¹, *M*_{w}/*M*ₙ = 1.3) respectively.
The polymerization of 1 000 eq. of *rac*-LA is complete within 30 min. (entry 20), but already reaches 83% conversion after 10 minutes (entry 19); here as well, the control is excellent (especially when complete conversion is not yet achieved, entries 18-19) and there is a very satisfactory agreement between experimental and theoretical molecular weights.
Their distribution is at first very narrow (*M*_{w}/*M*ₙ = 1.1-1.2), and somewhat broadens after complete consumption of the monomer (entry 20, *M*_{w}/*M*ₙ = 1.6). At higher monomer loading (2 000 eq., [*rac*-LA]/[Y[N(SiMe₃)₂]₃]/[TEMPO-OH] = 2 000:1:10), the conversion reaches an excellent 83% after 60 min., and the corresponding PLA-TEMPO displays a narrow polydispersity (*M*_{w}/*M*ₙ = 1.5); the experimental numberaverage molecular weight of 24 700 g.mol⁻¹ close to its theoretical value of 23 900 g.mol⁻¹ (entry 21). However, one must here stress out that at so high a monomer-to-initiator ratio (and beyond), it may prove necessary to scale up the size of the reactions and increase the amounts of catalyst used in order to avoid significant pre-polymerization catalyst deactivation and ensure good reproducibility.
These results indicate that the catalytic system Y[N(SiMe₃)₂]₃/TEMPO-OH is not only capable of polymerizing extremely rapidly very large amounts of *rac*-LA in styrene at room temperature, but also does so with a very good level of control over the molecular weight of the corresponding PLA-TEMPO. As one expects for an efficient chain transfer to an alcohol (here, TEMPO-OH) in a controlled polymerization, we have shown that the molecular weight of our polymers increases linearly with the monomer-to-alcohol ratio (Figure 1) and that there is agreement between theoretical and experimental values of the number-average molecular weights.

Using (BDI)ZnN(SiMe₃)₂ instead of Y[N(SiMe₃)₂]₃ for the polymerization of large quantities of lactide also gave excellent results. Indeed, at room temperature, (BDI)ZnN(SiMe₃)₂ and 20 eq. of TEMPO-OH happily convert 44% and 83% of 2 000 eq. of lactide in respectively 90 and 150 minutes while affording a very good control of the polymerization parameters (*M*ₙ = 6 700 g.mol⁻¹, *M*_{w}/*M*ₙ = 1.1 and *M*ₙ = 1 900 g.mol⁻¹, *M*_{w}/*M*ₙ = 1.1 respectively). At 50 °C, the conversion of 2 000 eq. of lactide is complete within 90 minutes, while the control remains excellent (*M*ₙ = 12 200 g.mol⁻¹, *M*_{w}/*M*ₙ = 1.1); this is accompanied by a very good agreement between experimental and calculated values of the molecular weights. Moreover, the (BDI)ZnN(SiMe₃)₂ / 20 TEMPO-OH system is still very active at 50 °C when 5 000 eq. of lactide are used, readily converting 46% of the monomer within 90 minutes while maintaining the very good control over the polymerization parameters (*M*ₙ = 13 500 g.mol⁻¹, *M*_{w}/*M*ₙ = 1.1).

**Table 4 - Influence of the amount of monomer in the Y[N(SiMe₃)₂]₃/TEMPO-OH system**

| | *rac*-LA/Y/RDH | Y [µmol] | [M] [mmol.L⁻¹] | T [°C] | [LA] [mol.⁻¹] | Time [min] | Conversion [%] | *Mₙ* theo^{a} [g.mol⁻¹] | *Mₙ*, GPC^{b} [g.mol⁻¹] | *M_{w}*/*Mₙ*^{b} |
|---|---|---|---|---|---|---|---|---|---|---|
| 14 | 200/1/10 | 20 | 10 | 20 | 2 | 5 | 63 | 1 800 | 3000 | 1.1 |
| 6 | 200/1/10 | 20 | 10 | 20 | 2 | 5 | 100 | 2900 | 3200 | 1.3 |
| 15 | 500/1/10 | 10 | 5 | 20 | 2 | 5 | 100 | 7200 | 7100 | 1.2 |
| 16 | 500/1/10 | 10 | 5 | 20 | 2 | 10 | 100 | 7200 | 7100 | 1.2 |
| 17 | 500/1/10 | 10 | 5 | 20 | 2 | 30 | 100 | 7200 | 7600 | 1.3 |
| 18 | 1000/1/10 | 5 | 2.5 | 20 | 2 | 5 | 36 | 5200 | 4100 | 1.1 |
| 19 | 1000/1/10 | 5 | 2.5 | 20 | 2 | 10 | 83 | 12000 | 10400 | 1.2 |
| 20 | 1000/1/10 | 5 | 2.5 | 20 | 2 | 30 | 100 | 14 400 | 14 700 | 1.6 |
| 21 | 2000/1/10 | 2 | 1 | 20 | 2 | 60 | 83 | 23 900 | 24 700 | 1.5 |

| | | | | | | | | | | |
|---|---|---|---|---|---|---|---|---|---|---|
| ^{a} *Mₙ* theo = [rac-LA]ₒ/[ROH] x conversion x 144 ^{b} *Mₙ* and *M_{w}*/*Mₙ* values as determined by GPC in THF vs. polystyrene standards and corrected by a factor of 0.58. Polymerization conditions Solvent: styrene (2.0 ml) Initiator: Y[N(SiMe₃)₂]₃ Co-initiator:TEMPO-OH | | | | | | | | | | |

**Table 4' - Influence of the amount of monomer in the (BDI)ZnN(SiMe₃)₂/TEMPO-OH system**

| | *rac*-LA/Y/RDH | Zn [µmol] | [M] [mmol.L⁻¹] | T [°C] | [LA] [mol.⁻¹] | Time [min] | Conversion [%] | *Mₙ* theo^{a} [g.mol⁻¹] | *Mₙ*, GPC^{b} [g.mol⁻¹] | *M_{w}*/*Mₙ*^{b} |
|---|---|---|---|---|---|---|---|---|---|---|
| | 2000/1/20 | 7.5 | 1.0 | 20 | 2.0 | 90 | 44 | 6 300 | 6 700 | 1.1 |
| | 2000/1/20 | 11.3 | 1.0 | 20 | 2.0 | 150 | 83 | 11 500 | 10 400 | 1.1 |
| | 2000/1/20 | 11.3 | 1.0 | 50 | 2.0 | 90 | 100 | 14 400 | 12200 | 1.1 |
| | 5000/1/20 | 9.5 | 0.4 | 50 | 2.0 | 90 | 46 | 16600 | 13 500 | 1.1 |

| | | | | | | | | | | |
|---|---|---|---|---|---|---|---|---|---|---|
| ^{a} *Mₙ* theo = [rac-LA]ₒ/[ROH] x conversion x 144 ^{b} *Mₙ* and *M_{w}*/ *Mₙ* values as determined by GPC in THF vs. polystyrene standards and corrected by a factor of 0.58. Polymerization conditions Solvent: styrene (2.0 ml) Initiator: (BDI)ZnN(SiMe₃)₂] Co-initiator:TEMPO-OH | | | | | | | | | | |

### Example 5- Characterization of the PLA-TEMPO polymers.

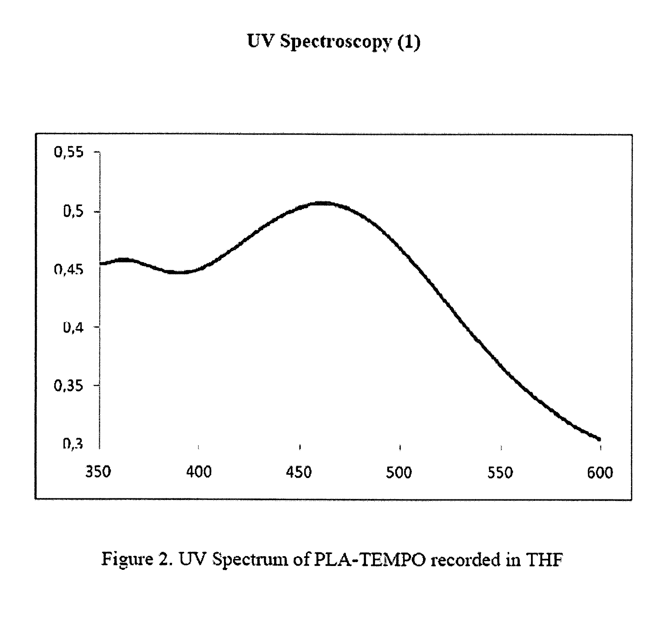

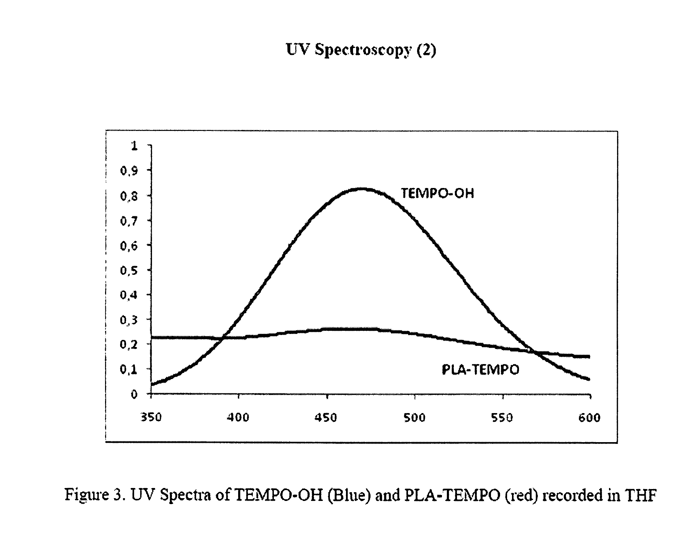

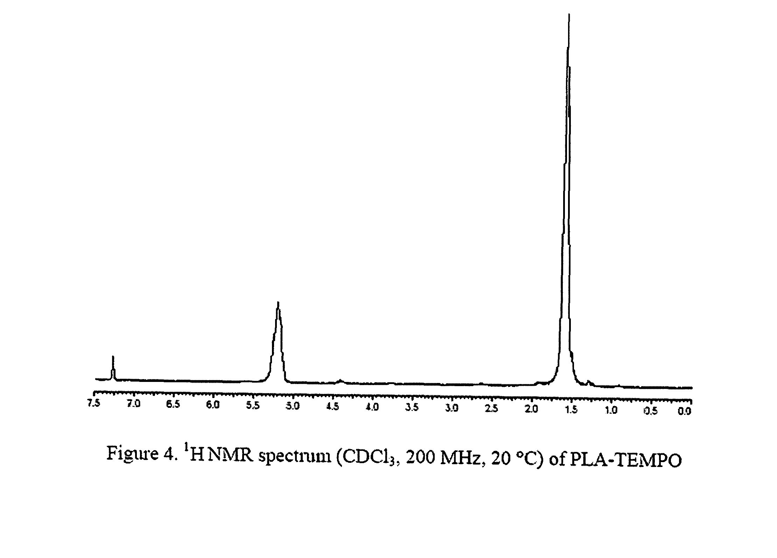

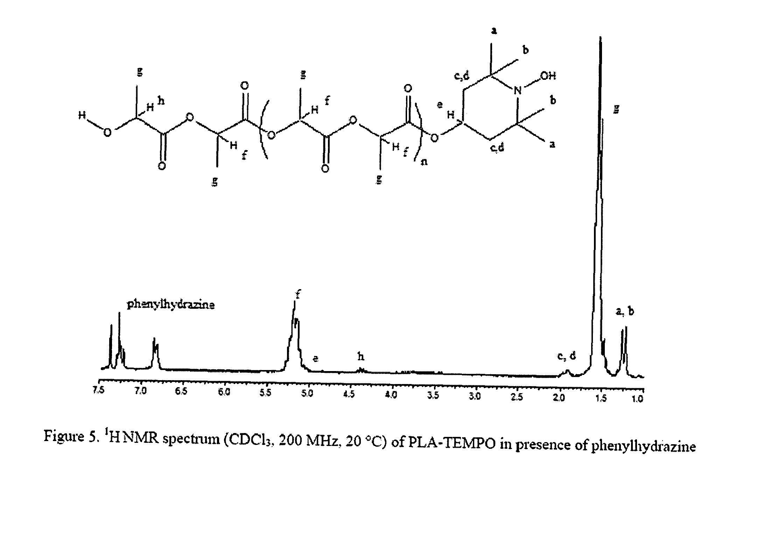

The nature of the prepared TEMPO-end-capped PLA has been established by UV, NMR and EPR spectroscopies. It is corroborated by the generally very good agreement between the theoretical and experimental values of the number-average molecular weights for the corresponding polymers. A low molecular weight PLA-TEMPO sample (*M*ₙ = 2 300 g.mol⁻¹, *M*_{w}/*M*ₙ = 1.2) was submitted for the detailed characterization below.
The UV spectrum (Figures 2 and 3) of the free nitroxyl radical TEMPO-OH recorded in THF displays an absorption band with Imax = 470 nm. On the other hand, in the same solvent, PLA-TEMPO (re-precipitated sample) gives rise to an absorption which, although much smaller, exhibits a maximum at Imax = 465 nm. This band can only be accounted for by the presence of a TEMPO unit within the polymer chain. The small intensity of this band is easily explained by the fact that a single TEMPO unit, located at the chain end, can be found in each polymer chain. The ¹H NMR spectrum of PLA-TEMPO *per se* recorded in CDCl3 displays poor signal-to-noise ratio and resolution (Figure 4); this is evidently due to the presence of the TEMPO free nitroxyl radical at the end of the polymer chain. This problem can be partly circumvented by the addition to the solution, immediately prior to the acquisition of the spectrum, of a small amount of phenylhydrazine (PhNHNH2) in order to quench the free radical. In the resulting spectrum (Figure 5), the presence of the TEMPO moiety at one of the chain-ends is definitively confirmed by the two singlets at 1.22 and 1.27 ppm (assigned to the protons of the axial and equatorial methyl groups) and the two signals at 1.91 and 1.98 ppm (assigned to the axial and equatorial methylene protons). The signal of the methine proton in the TEMPO moiety expected at 5.05 ppm is not discernable from the methine protons of the PLA backbone. In addition, the small quadruplet centered at 4.37 ppm is diagnostic of the methine proton bound to the hydroxyl end-group in -C*H*(CH₃)OH, at the other end of the polymer chain. The atactic nature of the polymer is confirmed by the multiplet centered on 5.18 ppm.

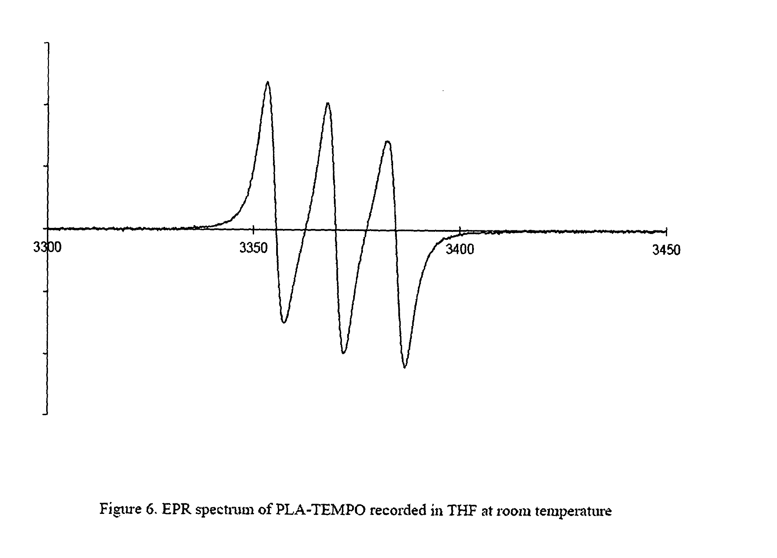

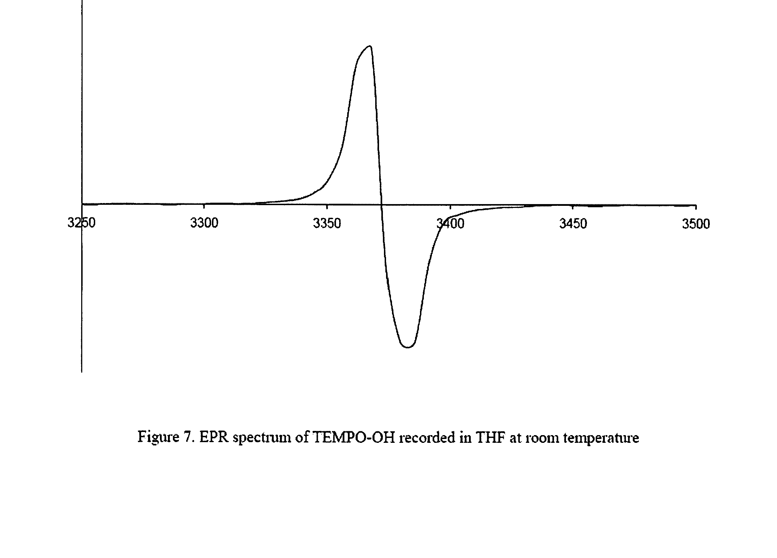

Finally, the presence of TEMPO free radical was further evidenced by EPR studies. The polymers were submitted to analysis in THF at room temperature. Three sharp signals are observed (Figure 6), the *g* value of which (2.0066) is identical to that of the starting material TEMPO-OH (Figure 7). Besides, both the *g*-value and the hyperfine coupling constants (AN =14.6 G) of our polymers compare well to those reported for a sample of poly(e-caprolactone) terminated by a TEMPO radical (*g* = 2.007, AN = 15.9 G). The characterization of the PLA-TEMPO polymers will be completed in the near future by MALDI-TOF mass spectroscopy and DSC analyses. In terms of solubility, all PLA-TEMPOs are fully soluble in THF, chlorinated solvents and, crucially, in styrene. This was anticipated owing to the atactic nature of these polymers, and it was indeed the following rationale which prompted us to select the *racemic* monomer for our polymerization studies instead on an enantiomerically pure isomer: *isotactic* PLA is highly crystalline and far less soluble in common organic solvents than its *atactic* analogue, and it is therefore advantageous to polymerize the *racemic* monomer without exerting a particular stereocontrol in order to avoid precipitation of PLA from the styrene solution during the course of the polymerization.

### Example 6- Preparation of PLA-PS block copolymers (table 5).

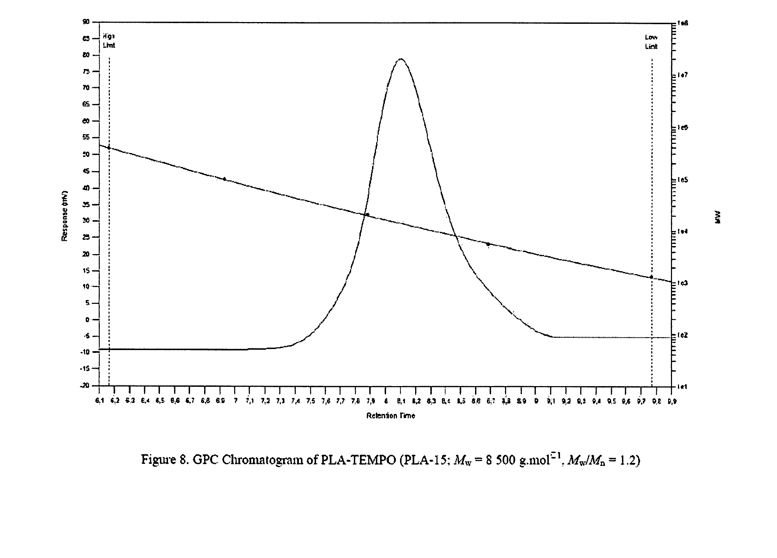

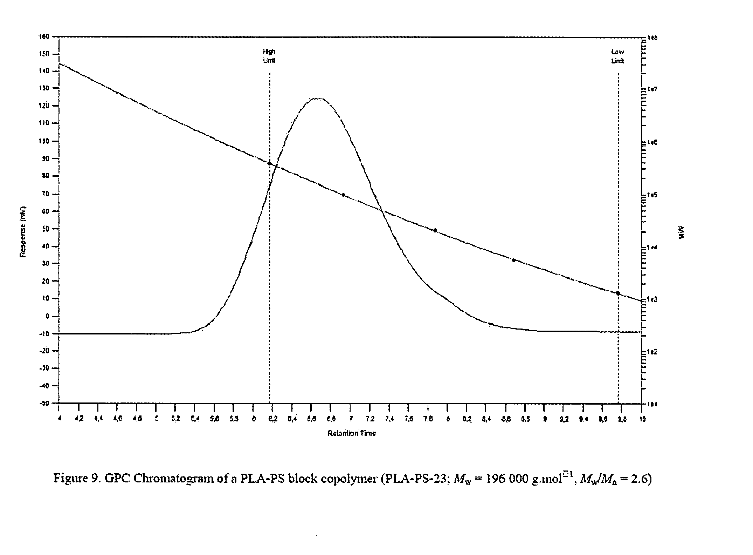

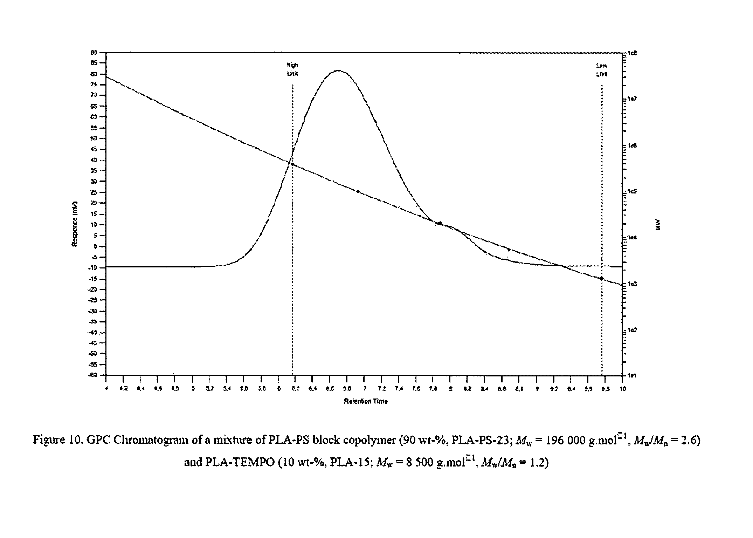

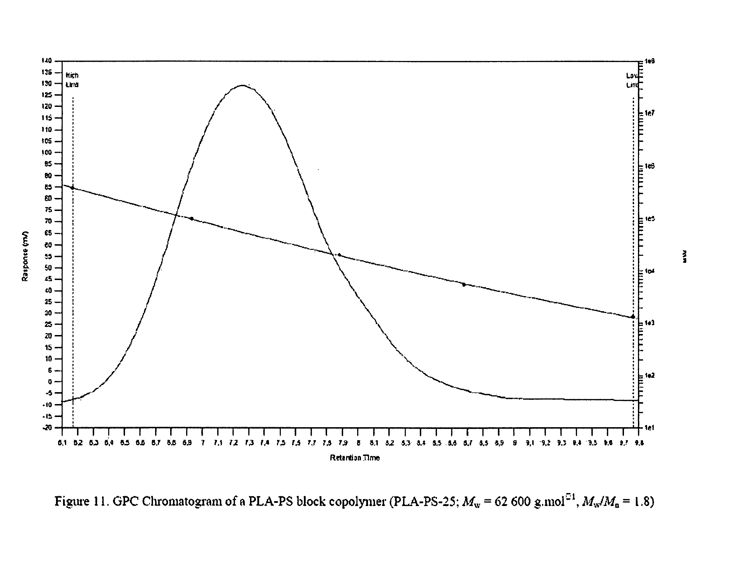

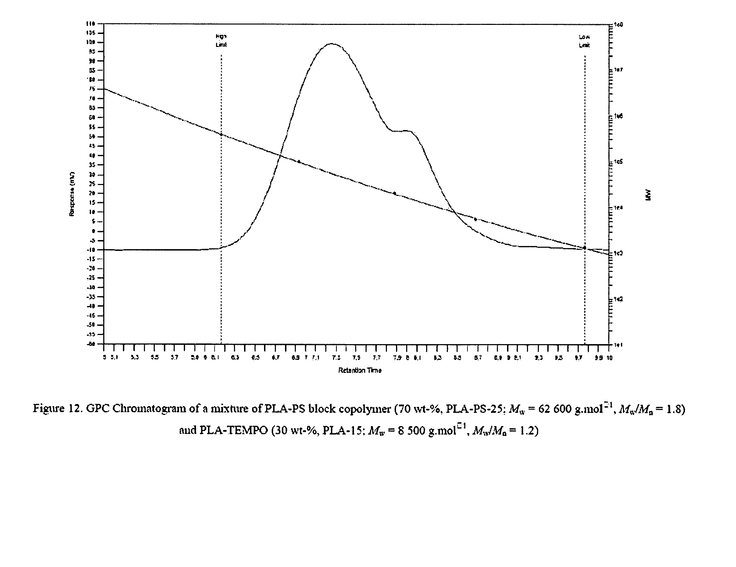

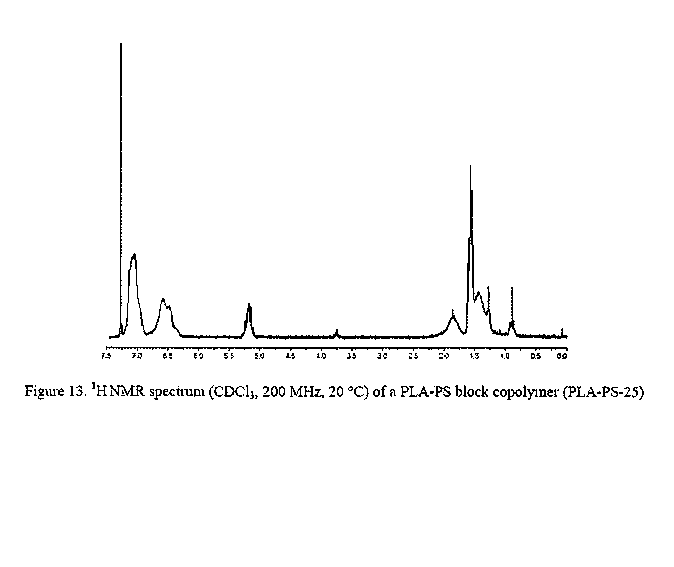

The PLA-TEMPO sample n°15 (entry 15 of table 4) referred as PLA-15 was used as a macro(co-initiator) for the preparation of PLA-polystyrene (PLA-PS) block copolymers by free-radical polymerization of styrene in presence of the peroxide 1,1-bis(*tert*-butylperoxy)cyclohexane (Table 5). The molecular weight distribution of the starting material PLA-15 (*M*_{w} = 8 500 g.mol⁻¹, *M*_{w/}*M*ₙ = 1.2) is depicted in Figure 8. The simple thermal treatment of styrene (0.8 mL) at 110 °C for 180 min results in the formation of polystyrene (entry 22; 127 mg, 18% conversion of the styrene monomer, *M*_{w} = 493 000 g.mol⁻¹, *M*_{w}/*M*ₙ = 2.4). By contrast, heating a styrene solution of PLA-TEMPO (70 mg, 9.8 mmol of free radical) in presence of 1,1-bis(*tert*-butylperoxy)cyclohexane (12.6 mmol) at 110 °C for 180 min yields (after work-up) a colorless material (660 mg, entry 23), with a corresponding 80% conversion of styrene. ¹H NMR characterization in CDCl3 of this polymer confirmed the presence of both PLA and PS segments. A weight-average molecular weight (*M*_{w}) of 196 000 g.mol⁻¹ has been determined by GPC for this material (labeled PLA-PS-23); its molecular weight distribution (Figure 9), although relatively broad (*M*_{w}/*M*ₙ = 2.6), is monomodal, which indicates that it consists of a true PLA-PS block copolymer [a mixture of homopolymers (*i*.*e.* PLA-15 and thermally-polymerized styrene as in entry n°22) would instead give rise to a bimodal distribution, with one fraction at high molecular weights (PS) and one fraction at low molecular weights (PLA-15)]. This is further confirmed by GPC analysis of a 9:1 mixture of the block copolymer (PLA-PS-23) and the starting material (PLA-15): evidence of its dual composition is unequivocally given by its molecular weight distribution (Figure 10), which broadens significantly with respect to that of PLA-PS-23 and draws towards bimodality (*M*_{w} = 179 700 g.mol⁻¹, *M*_{w}/*M*ₙ = 2.9).
In another experiment (entry 25), PLA-15 (100 mg, 14.1 mmol) and 1,1-bis(*tert-*butylperoxy) cyclohexane (17.5 mmol) were dissolved in styrene (0.8 mL). Upon heating of this solution at 95 °C for 30 min. and subsequently at 125 °C for another 30 min., followed by appropriate work-up with THF and hexane, a colorless polymer (PLA-PS-25) was isolated (330 mg, 32% conversion of styrene) and submitted for GPC and NMR analysis. The molecular weight distribution (*M*_{w} = 62 600 g.mol⁻¹, *M*_{w}/*M*ₙ = 1.8) is narrower than previously observed for PLA-PS-23. We attribute this better control to: (i) the separation between an activation period of 30 min. at 95 °C, followed by a polymerization of 30 min. at 125 °C, and (ii) a shorter reaction time, which limits problems due to monomer depletion and mass transport limitations. The monomodal nature of its molecular weight distribution (Figure 11) is indicative of the presence of a single component in PLA-PS-25; by opposition, the molecular distribution of a 7:3 mixture of PLA-PS-25 and PLA-15 is larger and clearly bimodal (Figure 12; *M*_{w} = 56 000 g.mol⁻¹, *M*_{w}/*M*ₙ = 2.0). It is worth noting than the related reaction carried out with the free radical TEMPO-OH (entry 24) instead of PLA-15 also affords a good control of the molecular weight (*M*_{w} = 48 300 g.mol⁻¹, *M*_{w}/*M*ₙ = 1.6), although the rate of polymerization is then considerably slower (15% conversion of styrene only with TEMPO-OH, entry 24, *vs*. 32% achieved with PLA-15, entry 25).
From its ¹H NMR spectrum recorded in CDCl₃ at room temperature (Figure 13), one can deduce the following composition for the block copolymer PLA-PS-25: ca. 23 mol-% PLA and 77 mol-% PS, which corresponds to 29 wt-% PLA and 71 wt-% PS. This is in excellent agreement with the calculations based on the isolated polymer yield: 30 wt-% PLA and 70 wt% PS (latter calculations based on 330 mg of recovered polymer, including 100 mg of PLA-15 starting material).

**Table 5 - Preparation of PLA-PS block copolymer**

| | PLA-TEMPO [mg] | TEMPO-OH [pmol] | Free radical [gmol] | Peroxide [p,mol] | Styrene [ml] | t [min] | T [°C] | Yield [mg] | Styrene conversion [%] | M_{w}^{a} [g.mol⁻¹] | (M_{w}/*M*ₙ)^{a} |
|---|---|---|---|---|---|---|---|---|---|---|---|
| 22 | - | - | - | - | 0.8 | 180 | 110 | 127 | 18 | 493 000 | 2.4 |
| 23 | 70 | - | 9.8 | 12.6 | 0.8 | 180 | 110 | 660 | 80 | 196000 | 2.6 |
| 24 | - | 17.3 | 17.3 | 17.3 | 0.8 | 30+30 | 95+125 | 110 | 15 | 48 300 | 1.6 |
| 25 | 100 | - | 14.1 | 17.3 | 0-8 | 30+30 | 95+125 | 330 | 32 | 62 600 | 1.8 |

| | | | | | | | | | | | |
|---|---|---|---|---|---|---|---|---|---|---|---|
| ^{a} M_{w} values as determined by GPC in THF vs. polystyrene standards. *Polymerization conditions* Solvent: styrene (bulk polymerization) PLA-TEMPO: n° 15 (PLA-15), *Mn =* 7 100 g.mol⁻¹, *M*_{w}/*M*ₙ = 1.2 | | | | | | | | | | | |

## Claims

1. Process to make a composition comprising a block copolymer A-B and optionally a monovinylaromatic polymer, said process comprising :
a) forming a mixture comprising:
one or more cyclic component polymerizable by ring-opening polymerization (ROP) dispersed in at least one monovinylaromatic monomer,
optionally a rubber dissolved in the monovinylaromatic monomer,
b) contacting the mixture of step a) with a mixture of b1 and b2 such that :
b1) is M[N(SiR⁸₃)₂]ₓ in which M is a metal, R⁸ is an hydrocarbon group and x is the valency of the metal M, or
a metal alkoxide M(OR⁹)ₓ in which M is a metal, R⁹ is an hydrocarbon group and x is the valency of the metal M,
or a mixture thereof,
or a single-site metal catalyst component based upon a bulky β-diiminate ligands (BDI), represented by the following general formula: 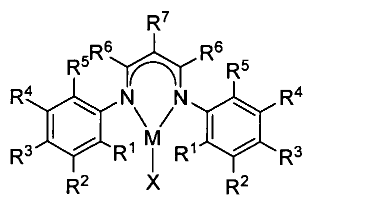
wherein R¹, R², R³, R⁴, R⁵, R⁶ and R⁷ are each independently selected from hydrogen, unsubstituted or substituted hydrocarbyl, or inert functional group and wherein two or more of said groups can be linked together to form one or more rings, wherein X is an hydrocarbyl radical having from 1 to 12 carbon atoms, an alkoxide group OR*, an amido group NR**₂ or a borohydride group (BH₄).
b2) a functional alcohol containing, besides its -OH function, another functionality Y enabling the growth or the grafting of a polyvinylaromatic, at conditions effective to produce by ROP of the cyclic component a block polymer A, having an -OH end and another function Y, dispersed in the monovinylaromatic monomer,
c) polymerizing the solution obtained at step b) optionally in the presence of a free radical initiator, optionally in the presence of chain transfer agents, at conditions effective to produce:
a monovinylaromatic block polymer B linked to the block polymer A by the aforementioned functionality Y such that H-A-O-R-Y-B or H-A-O-R-B-Y (referred in both cases as A-B to simplify) in which R is a linking group,
optionally a monovinylaromatic polymer,
d) optionally degassing the product of step c) to separate the optional unpolymerized monomers and comonomers and recovering optionally a composition comprising at least the block copolymer A-B, optionally a monovinylaromatic polymer and optionally a rubber.

2. Process according to claim 1 wherein in step b2) the -OH function of the alcohol acts as the chain transfer agent during the ROP catalytic process.

3. Process according to any one of the preceding claims wherein in step c) the linking group R is a hydrocarbon group.

4. Process according to any one of the preceding claims wherein in step b2), Y is selected among a nitroxide function =N-O*, a (meth)acrylate function, an alkene function, a thiol function, an alkoxy-amine function.

5. Process according to any one of the preceding claims wherein in step b1) the metal M in M[N(SiR⁸₃)₂]ₓ is a metal selected among the Lanthanides (Ln), Y, Zn, Fe and alkalino-earth metals.

6. Process according to any one of the preceding claims wherein in step b1) in the metal M in M[N(SiR⁸₃)₂]ₓ R⁸ is selected among a C1-C6 alkyl, a cycloalkyl.

7. Process according to any one of the preceding claims wherein at step b1) the metal alkoxide is an aluminium alkoxide.

8. Process according to any one of the preceding claims wherein at step b1) the single site metal catalyst is a β-diiminate-Zn-amido or a β-diiminate-zinc alkoxide complex.

9. Process according to any one of the preceding claims wherein at step b2) the functional alcohol is 4-hydroxy-2,2,6,6-tetramethylpiperidine 1-oxyl (also known as TEMPO-OH or 4-hydroxy-TEMPO).

10. Process according to any one of claims 1 to 8 wherein at step b2) the functional alcohol is an hydroxy-alkoxyamine.

11. Process according to any one of the preceding claims wherein the cyclic component polymerizable by ring-opening polymerization is a lactide or a cyclic carbonate.

12. Use of the diblocks A-B made according to any one of the preceding claims as compatibilizers.

13. Use of the diblocks A-B made according to any one of claims 1 to 11 as compatibilizers in mixtures comprising at least a polymer made essentially of the same monomer units as the block A and at least a polymer made essentially of the same monomer units as the block B.

14. Mixture comprising the diblock A-B made according to any one of claims 1 to 11 and:
either one or more polymers made essentially of the same monomer units as the block A,
or one or more polymers made essentially of the same monomer units as the block B.

15. Composition comprising:
a block copolymer H-A-O-R-Y-B or H-A-O-R-B-Y, referred as A-B for simplification, in which
the repeating units of the block A are selected among the residues of one or more aliphatic hydroxycarboxylic acid and the residues of one or more cyclic carbonate,
the repeating units of the block B are the residues of a monovinyl aromatic monomer,
the block A and the block B are linked as H-A-O-R-Y-B or H-A-O-R-B-Y in which R and Y are deriving from a functional alcohol containing, besides its -OH function, another functionality Y enabling the growth or the grafting of a polyvinylaromatic, and in which R is a linking group,
optionally a polymer A1 compatible with the block A,
optionally a polymer B1 compatible with the block B,
wherein,
At least one of A1 or B1 is present.

16. Composition according to claim 15 wherein the polymer A1 is made essentially of the same monomer units as the block A.

17. Composition according to claim 15 or 16 wherein the polymer B1 is made essentially of the same monomer units as the block B.
